# EUROPEAN PATENT APPLICATION

(11) **EP 4 725 926 A1**
(43) Date of publication of application: **15.04.2026**
(21) Application number: 25828082.5
(22) Date of filing: 16.07.2025
(51) Int. Cl.: C03C 4/04, C03C 3/095, C03B 32/02

(54) **CURVED PHOTOSENSITIVE GLASS, PREPARATION METHOD THEREFOR AND USE THEREOF**

(30) Priority: 31.07.2024 CN 202411042026
(71) Applicant: Chongqing Aureavia Hi-tech Glass Co., Ltd, Chongqing 400714 (CN)
(72) Inventor: TIAN, Qian, Chongqing 400714 (CN); LUO, Site, Chongqing 400714 (CN); HUANG, Hao, Chongqing 400714 (CN); YIN, Weiwei, Chongqing 400714 (CN); WANG, Li, Chongqing 400714 (CN); TAN, Youhong, Chongqing 400714 (CN)
(74) Representative: Dantz, Dirk
(86) International application number: PCT/CN2025/108905
(87) International publication number: WO 2026/026556

(57) **Abstract**

The embodiments of the present disclosure provide a curved photosensitive glass, a preparation method therefor, and use thereof. By ensuring that the curved photosensitive glass satisfies a specific composition, particularly by controlling the contents of CeO₂, Sb₂O₃, and Ag₂O to fall within specific ranges, the present disclosure enables an exposed area of the curved photosensitive glass to exhibit good light-shielding performance and appear uniformly black after hot-bending treatment; meanwhile enables a non-exposed area of the curved photosensitive glass to exhibit good light-transmitting performance; and enables the curved photosensitive glass to meet the requirements for fields such as mobile phone cover plates and smartwatches.

## Description

### CROSS-REFERENCE TO RELATED APPLICATION

The present disclosure claims priority to Chinese Patent Application No. 202411042026.2, titled "CURVED PHOTOSENSITIVE GLASS AND PREPARATION METHOD THEREFOR AND USE THEREOF", filed before the China National Intellectual Property Administration on July 31, 2024, which is incorporated herein by reference in its entirety.

### TECHNICAL FIELD

The present disclosure relates to the technical field of glass, in particular to a curved photosensitive glass and a preparation method therefor and use thereof.

### BACKGROUND

After UV exposure and heat treatment, a photosensitive glass can form a light-shielding opaque region in an exposed area. This region has low light transmittance and exhibits light-shielding performance compared to an unexposed portion of the glass. Therefore, applying the photosensitive glass to fields such as mobile phone cover plates and smartwatch back covers can avoid signal crosstalk between test light of different wavelengths. However, current curved photosensitive glass, especially after hot-bending treatment, still faces the problem of insufficient light-shielding performance for visible light and near-infrared light in its exposed area. Consequently, the requirements of applying curved photosensitive glass to fields such as mobile phone cover plates and smartwatches have not yet been fully met.

### SUMMARY

The purpose of the present disclosure is to provide a curved photosensitive glass whose exposed area exhibits good light-shielding performance and can meet the requirements for fields such as mobile phone cover plates and smartwatches.

To achieve the above purpose, the present disclosure provides the following technical solutions:
In a first aspect, a curved photosensitive glass is provided, comprising an exposed area and a non-exposed area, wherein the curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on a mass percentage of oxides.

Optionally, the curved photosensitive glass comprises the following components:
SiO₂ with a content of 66.00% to 74.60%, preferably SiO₂ with a content of 66.50% to 74.00%; and/or
Al₂O₃ with a content of 5.10% to 9.70%, preferably Al₂O₃ with a content of 5.20% to 9.40%; and/or
Li₂O with a content of 7.10% to 14.50%, preferably Li₂O with a content of 8.00% to 14.50%; and/or
Na₂O with a content of 1.00% to 3.80%, preferably Na₂O with a content of 1.00% to 3.75%; and/or
K₂O with a content of 1.40% to 3.90%, preferably K₂O with a content of 1.40% to 3.85%; and/or
ZrO₂ with a content of 5.00% to 7.50%, preferably ZrO₂ with a content of 5.10% to 7.50%; and/or
Ag₂O with a content of 0.15% to 0.60%, preferably Ag₂O with a content of 0.15% to 0.50%; and/or
CeO₂ with a content of 0.05% to 0.14%, preferably CeO₂ with a content of 0.07% to 0.14%; and/or
Sb₂O₃ with a content of 0.20% to 0.50%, preferably Sb₂O₃ with a content of 0.20% to 0.48%,
based on the mass percentage of oxides.

Optionally, the curved photosensitive glass comprises one or more selected from the group consisting of 3D photosensitive glass, 4D photosensitive glass, 5D photosensitive glass, special-shaped photosensitive glass, and four-curved-surface photosensitive glass.

Optionally, the curved photosensitive glass is obtained by processing treatment of a substrate glass, and the processing treatment comprises radiation treatment and subsequent heat treatment and hot-bending treatment.

Optionally, a composition of the substrate glass is the same as or substantially the same as that of the curved photosensitive glass.

Optionally, a thickness of the curved photosensitive glass is 0.3 to 2.0 mm; preferably 0.3 to 1.0 mm.

Optionally, when the thickness of the curved photosensitive glass is 0.30 to 1.00 mm, a transmittance T₁ of the exposed area of the curved photosensitive glass at a wavelength of 550 nm is 0.00% to 5.00%, preferably the transmittance T₁ is 0.00% to 3%; and/or
when the thickness of the curved photosensitive glass is 0.30 to 1.00 mm, a transmittance T₂ of the non-exposed area of the curved photosensitive glass at a wavelength of 550 nm is more than or equal to 90%; and/or
when the thickness of the curved photosensitive glass is 0.30 to 1.00 mm, a transmittance T₃ of the exposed area of the curved photosensitive glass at a wavelength of 850 nm is 0.00% to 8.00%, preferably the transmittance T₃ is 0.00% to 5%; and/or
when the thickness of the curved photosensitive glass is 0.30 to 1.00 mm, a transmittance T₄ of the non-exposed area of the curved photosensitive glass at a wavelength of 850 nm is more than or equal to 90%; and/or
when the thickness of the curved photosensitive glass is 0.30 to 1.00 mm, a transmittance T₅ of the exposed area of the curved photosensitive glass at a wavelength of 900 nm is 0.00% to 10.00%, preferably the transmittance T₅ is 0.00% to 8%; and/or
when the thickness of the curved photosensitive glass is 0.30 to 1.00 mm, a transmittance T₆ of the non-exposed area of the curved photosensitive glass at a wavelength of 900 nm is more than or equal to 90%.

Optionally, a crystalline phase of the exposed area of the curved photosensitive glass comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

Optionally, the non-exposed area of the curved photosensitive glass is substantially free of crystalline phase or comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

Optionally, the crystalline phase of the exposed area and the crystalline phase of the non-exposed area of the curved photosensitive glass are the same.

In a second aspect, a preparation method for the above-mentioned curved photosensitive glass is provided, comprising:
obtaining the substrate glass;
the substrate glass comprises a first area and a second area, performing masking treatment on the first area, and not performing masking treatment on the second area, to obtain a masked substrate glass; and
after performing processing treatment on the masked substrate glass, obtaining the curved photosensitive glass having the non-exposed area and the exposed area; wherein the non-exposed area corresponds to the first area, and the exposed area corresponds to the second area; the processing treatment comprises radiation treatment and subsequent heat treatment and hot-bending treatment.

Optionally, the composition of the substrate glass is the same as or substantially the same as that of the curved photosensitive glass.

Optionally, a thickness of the substrate glass is 0.3 to 2.0 mm; preferably 0.3 to 1.0 mm.

Optionally, the radiation treatment comprises ultraviolet irradiation treatment.

Optionally, a wavelength of the ultraviolet irradiation treatment is 300 nm to 320 nm, an intensity of the ultraviolet irradiation treatment is 20 mW/cm² to 360 mW/cm², and a time of the ultraviolet irradiation treatment is 5 min to 60 min.

Optionally, the masking treatment comprises masking using a masking ink and/or a mask.

Optionally, the heat treatment comprises nucleation treatment and crystallization treatment.

Optionally, a heating rate of the nucleation treatment is 1 °C/min to 10 °C/min; and/or
a temperature of the nucleation treatment is 430 °C to 500 °C; and/or
a time of the nucleation treatment is 30 min to 360 min; and/or
a heating rate of the crystallization treatment is 1 °C/min to 10 C/min; and/or
a temperature of the crystallization treatment is higher than that of the nucleation treatment, and the temperature of the crystallization treatment is 500 °C to 800 °C; and/or
a time of the crystallization treatment is 30 min to 480 min.

In a third aspect, a strengthened curved photosensitive glass is provided. The strengthened curved photosensitive glass has a thickness t and comprises a strengthening layer extending inward from a surface of a curved photosensitive glass body, a thickness of the strengthening layer is greater than 0 and less or equal to 0.22 t, the strengthening layer comprises the following components: SiO₂: 65.00% to 75.00%, Al₂O₃: 5.00% to 10.00%, Na₂O: 5.00% to 20.00%, K₂O: 2.00% to 6.00%, ZrO₂: 5.00% to 8.00%, Ag₂O: 0.15% to 0.80%, CeO₂: 0.05% to 0.15%, and Sb₂O₃: 0.1% to 0.50%, based on a mass percentage of oxides; a content of Li₂O in the strengthening layer is lower than a content of Li₂O at a center of the strengthened curved photosensitive glass;
the center of the strengthened curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides; and
the strengthened curved photosensitive glass comprises a non-exposed area and an exposed area.

Optionally, the chemical strengthening comprises single-step chemical strengthening or multi-step chemical strengthening.

Optionally, the single-step chemical strengthening uses a salt bath comprising NaNO₃; preferably the content of NaNO₃ is 30 to 100 wt%; preferably the single-step chemical strengthening uses a mixed salt bath comprising NaNO₃ and KNO₃, preferably the content of KNO₃ in the mixed salt bath is 80 to 100 wt%, and the content of NaNO₃ is 0 to 20 wt%.

Optionally, the temperature of the single-step chemical strengthening is 380 to 480 °C; preferably the ion exchange time of the single-step chemical strengthening is 1 to 10 hours.

Optionally, the multi-step chemical strengthening comprises two-step chemical strengthening, wherein a first step of chemical strengthening uses a salt bath comprising NaNO₃, preferably the content of NaNO₃ is 30 to 100 wt%; a second step of chemical strengthening uses a salt bath comprising KNO₃, preferably the content of KNO₃ is 60 to 100 wt%.

Optionally, a temperature of the first step of chemical strengthening is 380 to 480 °C, preferably a time of the first step of chemical strengthening is 1 to 10 hours; preferably a temperature of the second step of chemical strengthening is 380 to 480 °C, preferably a time of the second step of chemical strengthening is 5 to 120 min.

Optionally, a surface compressive stress (CS) of the non-exposed area of the strengthened curved photosensitive glass is more than or equal to 300 MPa, preferably more than or equal to 350 MPa, further preferably 350 MPa to 600 MPa.

Optionally, a uniaxial compressive strength of the strengthened curved photosensitive glass is more than or equal to 100 N, preferably 100 N to 400 N, more preferably 200 N to 400 N.

In a fourth aspect, a cover plate glass is provided, wherein the cover plate glass uses the curved photosensitive glass according to any embodiment of the first aspect, or the curved photosensitive glass prepared by the preparation method of the curved photosensitive glass according to any embodiment of the second aspect, or the strengthened curved photosensitive glass according to any embodiment of the third aspect.

In a fifth aspect, an electronic device is provided, comprising the curved photosensitive glass according to any embodiment of the first aspect, or the curved photosensitive glass prepared by the preparation method of the curved photosensitive glass according to any embodiment of the second aspect, or the strengthened curved photosensitive glass according to any embodiment of the third aspect.

Optionally, the electronic device comprises a smart wearable device worn on the body, which comprises a shell having a top and a bottom. The bottom is designed to be in contact with the user's skin when worn, and a shell part at the bottom comprises the curved photosensitive glass according to any embodiment of the first aspect, or the curved photosensitive glass prepared by the preparation method of the curved photosensitive glass according to any embodiment of the second aspect, or the strengthened curved photosensitive glass according to any embodiment of the third aspect.

Optionally, the electronic device further comprises a camera component located inside a housing. The housing comprises a camera protection cover plate. The camera protection cover plate is disposed over the camera component. The camera protection cover plate comprises the curved photosensitive glass according to any embodiment of the first aspect, or the curved photosensitive glass prepared by the preparation method of the curved photosensitive glass according to any embodiment of the second aspect, or the strengthened curved photosensitive glass according to any embodiment of the third aspect.

In a sixth aspect, use of the above-mentioned curved photosensitive glass, or the curved photosensitive glass prepared by the preparation method of the above-mentioned curved photosensitive glass, or the above-mentioned strengthened photosensitive glass in a component for a mobile phone, a wearable device, a camera module, or a vehicle is provided.

Compared with the prior art, one or more of the technical solutions provided by the present disclosure comprises the following advantages:
By ensuring that the curved photosensitive glass satisfies a specific composition, particularly by controlling the contents of CeO₂, Sb₂O₃, and Ag₂O to fall within specific ranges, the present disclosure enables an exposed area of the curved photosensitive glass to exhibit good light-shielding performance and appear uniformly black after hot-bending treatment; meanwhile enables a non-exposed area of the curved photosensitive glass to exhibit good light-transmitting performance; and enables the curved photosensitive glass to meet the requirements for fields such as mobile phone cover plates and smartwatches.

### BRIEF DESCRIPTION OF THE DRAWINGS

In order to illustrate the technical solutions of the examples of the present disclosure more clearly, the drawings required for describing the examples are briefly introduced below. It should be understood that the following drawings only show some examples of the present disclosure and therefore should not be considered as limiting the scope. For those of ordinary skill in the art, other related drawings can be obtained based on these drawings without creative effort.
FIG. 1 is a structural schematic diagram of a substrate glass after masking with a masking ink according to an embodiment of the present disclosure.
FIG. 2 is a structural schematic diagram of a photosensitive glass according to an embodiment of the present disclosure.
FIG. 3 is a morphology photograph of a photosensitive glass according to an embodiment of the present disclosure, where a is the morphology from a first viewing angle, and b is the morphology from a second viewing angle.
FIG. 4 is a rear structural schematic diagram of an electronic device according to an embodiment of the present disclosure.
FIG. 5 is a structural schematic diagram of a smartwatch according to an embodiment of the present disclosure.
FIG. 6 is a diagram showing a comparison of transmittance curves in the range of 240 nm to 360 nm between the substrate glass provided in Example 4 and Comparative Example 2 of the present disclosure.

Reference numerals: 11 - light-transmitting area; 12 - light-shielding area; 21 - exposed area; 22 - non-exposed area; 31 - camera protection cover plate; 32 - camera component; 33 - back cover; 41 - back cover of a smartwatch.

### DETAILED DESCRIPTION

The embodiments of the present disclosure will be described in detail below with reference to the examples. However, those skilled in the art will understand that the following examples are only configured to illustrate the present disclosure and should not be regarded as limiting the scope of the present disclosure. If specific conditions are not indicated in the examples, they are carried out according to conventional conditions or the conditions recommended by the manufacturer. Reagents or instruments for which the manufacturer is not indicated are all commercially available conventional products.

The endpoints and any values of the ranges disclosed herein are not limited to the precise ranges or values, and these ranges or values should be understood to comprise values close to these ranges or values. For numerical ranges, the endpoint values of each range, the endpoint values of each range and separate point values, as well as separate point values can be combined with each other to obtain one or more new numerical ranges, which should be considered as specifically disclosed herein. Among them, the terms "optional" and "optionally" both refer to that they may be comprised or may not be comprised (or may exist, or may not exist). The term "and/or" as used herein is inclusive, for example, "A and/or B" refers to only A, or only B, or both A and B.

### Term explanation and test methods:

In the present disclosure, the main surface refers to the surface with the largest area, for example, the upper surface or lower surface of a horizontally placed photosensitive glass sheet.

In the present disclosure, the infrared wavelength range refers to 750 nm to 1000 nm.

In the present disclosure, the thickness of the glass was tested with a micrometer.

In the present disclosure, the size specifications of the glass sheet were tested using a 2D video measuring machine (instrument model Miyu MY-YXCL-4030).

Surface CS was tested using the Japan ORIHARA's FSM-6000. Test conditions: light source wavelength 596 nm, SOC=28.6 (nm/cm)/MPa, refractive index=1.52. In the present disclosure, the surface compressive stress of the glass tested is the CS of the non-exposed area. The exposed area cannot be tested because light waves cannot penetrate the glass.

In the present disclosure, the crystalline phase and crystal content of the glass were confirmed by XRD testing as follows:
(1) XRD testing: the photosensitive glass of the present disclosure was crushed and ground into samples with particle size less than 75 µm. The ground samples were tested using an X-ray diffractometer to obtain the XRD diffraction peak curve and XRD diffraction data. The X-ray diffractometer used in the present disclosure was Shimadzu XRD-6100, the target material was copper, 2θ=10 °to 50 °, scanning speed was 6 °/min, operating voltage was 40 kV, and operating current was 30 mA.
(2) Determination of crystalline phase: the XRD diffraction data were analyzed using Jade software (JADE Standard 8.6) to determine the crystalline phases in the samples.
(3) Determination of crystal content (also known as crystallinity): the XRD test results (RAW format) were imported into the X-ray diffraction data Rietveld refinement software Jade for fitting and calculation, and the crystallinity of the sample was determined. Specifically, the ratio of the fitted crystalline phase peak area to the fitted total peak area was recorded as the crystal content of the sample. In the present disclosure, the crystal content at different positions of the same piece of glass was tested and the average crystal content was taken.

In the present disclosure, an ultraviolet-visible spectrophotometer was used to test the transmittance of the exposed area and the non-exposed area of the glass to be tested. The ultraviolet-visible spectrophotometer used for testing in the present disclosure was Shimadzu's UV-2000 ultraviolet-visible spectrophotometer.

The specific method for testing the exposed area of the glass to be tested was as follows: first, a jig with the same shape and size as the glass to be tested, where the corresponding area of the exposed area of the glass to be tested was a hollowed-out area and the corresponding area of the non-exposed area of the glass to be tested was a light-proof area, and the connection position between the hollowed-out area and the light-proof area was light-proof, was used as a blank sample for test calibration. Then, the exposed area of the glass to be tested was cut into a sample that coincided with the shape of the hollowed-out area of the jig and placed into the hollowed-out area of the aforementioned jig for testing to obtain the transmittance. The ultraviolet-visible spectrophotometer was used to test the transmittance of the exposed area of five pieces of glass to be tested from the same batch to light of different wavelengths, and then the average value was taken, which was recorded as the transmittance result of the exposed area of the glass to be tested at that wavelength of light.

In addition, the ultraviolet-visible spectrophotometer was used to test the transmittance of the non-exposed area of five pieces of glass to be tested from the same batch to light of different wavelengths. The average value of the transmittance measured for the non-exposed areas of the five pieces of glass to be tested at different wavelengths of light was taken, and recorded as the transmittance result of the non-exposed area of the glass to be tested at that wavelength of light.

In the present disclosure, the uniaxial compressive strength test can be performed as follows: the glass sample sheet to be tested was placed on the bottom ring of a tensile testing machine (LT-850A), the test software was started, the moving speed of the extrusion rod (rod diameter 8 mm, press head arc radius 10 mm) was set to 50 mm/min, and the test was started. The extrusion rod applied force to the center of the glass sample sheet to be tested at the set moving speed until cracks appeared and the glass sample sheet broke. The test software automatically read the force (N) at the time the glass sample sheet broke as the test result. Ten glass samples in the same state were tested, and the average value of the test results was taken as the uniaxial compressive strength of the glass sample sheet to be tested.

In some embodiments of the present disclosure, a curved photosensitive glass is provided, comprising an exposed area and a non-exposed area, the curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides;

In the present disclosure, SiO₂ is a glass-forming oxide. It forms an irregular continuous network with structural units of silicon-oxygen tetrahedra, which constitutes as the skeleton for glass formation. In some embodiments of the present disclosure, the content of SiO₂ in the curved photosensitive glass is 65.00% to 75.00%, preferably 66.00% to 74.60%, more preferably 66.50% to 74.00%, based on the mass percentage of oxides.

In some embodiments of the present disclosure, the content of SiO₂ in the curved photosensitive glass can be 65.00%, 66.00%, 67.00%, 68.00%, 69.00%, 70.00%, 71.00%, 72.00%, 73.00%, 74.00%, 75.00%, 67.20%, 74.60%, 68.26%, 70.28%, 70.01%, 69.05% or 65.30%, or a value within a numerical range formed by any two of the above specific values as endpoints, based on the mass percentage of oxides. It should be understood that, in the embodiments, any of the above ranges can be combined with any other range.

In the present disclosure, Al₂O₃ is a glass network intermediate, entering the glass network structure as [AlO₄] tetrahedra. An increase in Al₂O₃ can increase the T_{g} temperature of the glass, enhance thermal stability, and facilitate to suppress phase separation during the heat treatment of the glass. But excessive Al₂O₃ will increase the melting temperature of the glass. In some embodiments of the present disclosure, the content of Al₂O₃ in the curved photosensitive glass is 5.00% to 10.00%, preferably 5.10% to 9.70%, more preferably 5.20% to 9.40%, based on the mass percentage of oxides.

In some embodiments of the present disclosure, the content of Al₂O₃ in the curved photosensitive glass can be 5.00%, 5.50%, 6.00%, 6.50%, 7.00%, 7.50%, 8.00%, 8.50%, 9.00%, 9.50%, 10.00%, 7.25%, 5.83%, 8.76%, 7.62%, 7.89%, 6.47% or 8.96%, or a value within a numerical range formed by any two of the above specific values as endpoints, based on the mass percentage of oxides. It should be understood that, in the embodiments, any of the above ranges can be combined with any other range.

In some embodiments of the present disclosure, the content of Li₂O in the curved photosensitive glass is 7.00% to 15.00%, preferably 7.10% to 14.50%, more preferably 8.00% to 14.50%, based on the mass percentage of oxides.

In some embodiments of the present disclosure, the content of Li₂O in the curved photosensitive glass can be 7.00%, 7.50%, 8.00%, 8.50%, 9.00%, 9.50%, 10.00%, 10.50%, 11.00%, 11.50%, 12.00%, 12.50%, 13.00%, 13.50%, 14.00%, 14.50%, 15.00%, 12.30%, 8.02%, 12.26%, 9.81%, 9.48%, 11.05% or 14.37%, or a value within a numerical range formed by any two of the above specific values as endpoints, based on the mass percentage of oxides. It should be understood that, in the embodiments, any of the above ranges can be combined with any other range.

In some embodiments of the present disclosure, the content of Na₂O in the curved photosensitive glass is 1.00% to 4.00%, preferably 1.00% to 3.80%, more preferably 1.00% to 3.75%, based on the mass percentage of oxides. In some embodiments of the present disclosure, the content of Na₂O in the curved photosensitive glass can be 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 3.22%, 3.71%, 2.08%, 2.42%, 2.40%, 2.50% or 1.02%, or a value within a numerical range formed by any two of the above specific values as endpoints, based on the mass percentage of oxides. It should be understood that, in the embodiments, any of the above ranges can be combined with any other range.

In some embodiments of the present disclosure, the content of K₂O in the curved photosensitive glass is 1.00% to 4.00%, preferably 1.40% to 3.90%, more preferably 1.40% to 3.85%, based on the mass percentage of oxides. In some embodiments of the present disclosure, the content of K₂O in the curved photosensitive glass can be 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 3.83%, 1.42%, 3.02%, 3.41%, 3.52%, 2.58% or 2.87%, or a value within a numerical range formed by any two of the above specific values as endpoints, based on the mass percentage of oxides. It should be understood that, in the embodiments, any of the above ranges can be combined with any other range.

In some embodiments of the present disclosure, the content of ZrO₂ in the curved photosensitive glass is 5.00% to 8.00%, preferably 5.00% to 7.50%, more preferably 5.10% to 7.50%, based on the mass percentage of oxides. In some embodiments of the present disclosure, the content of ZrO₂ in the curved photosensitive glass can be 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%, 5.56%, 5.72%, 5.12%, 5.58%, 5.63%, 7.50% or 6.98%, or a value within a numerical range formed by any two of the above specific values as endpoints, based on the mass percentage of oxides. It should be understood that, in the embodiments, any of the above ranges can be combined with any other range.

In some embodiments of the present disclosure, the content of Ag₂O in the curved photosensitive glass is 0.15% to 0.80%, preferably 0.15% to 0.60%, more preferably 0.15% to 0.50%, based on the mass percentage of oxides. In some embodiments of the present disclosure, the content of Ag₂O in the curved photosensitive glass can be 0.15%, 0.20%, 0.22%, 0.24%, 0.26%, 0.28%, 0.30%, 0.32%, 0.34%, 0.36%, 0.38%, 0.40%, 0.42%, 0.44%, 0.46%, 0.48%, 0.50%, 0.23%, 0.27%, 0.15%, 0.36%, 0.45%, 0.31%, 0.21%, 0.60%, 0.70% or 0.80%, or a value within a numerical range formed by any two of the above specific values as endpoints, based on the mass percentage of oxides. It should be understood that, in the embodiments, any of the above ranges can be combined with any other range.

In the present disclosure, CeO₂ is a photosensitizer, providing electrons for Ag⁺. When the content of CeO₂ is lower than 0.05%, it cannot provide sufficient electrons to reduce Ag⁺ to silver atom Ag⁰, reducing the light-shielding performance of the exposed area. When the content of CeO₂ is higher than 0.15%, the penetration depth of ultraviolet light in the exposed area of the glass decreases, reducing the light-shielding performance of the exposed area. In some embodiments of the present disclosure, the mass percentage of CeO₂ in the curved photosensitive glass is 0.05% to 0.15%, preferably 0.05% to 0.14%, more preferably 0.07% to 0.14%, based on the mass percentage of oxides.

In some embodiments of the present disclosure, the content of CeO₂ in the curved photosensitive glass can be 0.05%, 0.06%, 0.07%, 0.08%, 0.09%, 0.10%, 0.11%, 0.12%, 0.13%, 0.14% or 0.15%, or a value within a numerical range formed by any two of the above specific values as endpoints, based on the mass percentage of oxides. It should be understood that, in the embodiments, any of the above ranges can be combined with any other range.

In the present disclosure, Sb₂O₃ is a weak reducing agent and also serves as a clarifying agent. Sb³⁺ undergoes a redox reaction with Ce⁴⁺ during glass melting, maintaining the effective content of Ce³⁺. In some embodiments of the present disclosure, the mass percentage of Sb₂O₃ in the curved photosensitive glass is 0.1% to 0.50%, preferably 0.20% to 0.50%, more preferably 0.20% to 0.48%, based on the mass percentage of oxides.

In some embodiments of the present disclosure, the content of Sb₂O₃ in the curved photosensitive glass can be 0.1%, 0.15%, 0.20%, 0.25%, 0.29%, 0.30%, 0.35%, 0.36%, 0.40%, 0.43%, 0.45%, 0.48% or 0.50%, etc., or a value within a numerical range formed by any two of the above specific values as endpoints, based on the mass percentage of oxides. It should be understood that, in the embodiments, any of the above ranges can be combined with any other range.

In some embodiments of the present disclosure, the curved photosensitive glass comprises one or more selected from the group consisting 3D photosensitive glass, 4D photosensitive glass, 5D photosensitive glass, special-shaped photosensitive glass, and four-curved-surface photosensitive glass.

The curved photosensitive glass is obtained by processing treatment of a substrate glass. The processing treatment comprises radiation treatment and subsequent heat treatment and hot-bending treatment. In some embodiments of the present disclosure, preferably the temperature of the hot-bending treatment is 560 °C to 630 °C. In some embodiments of the present disclosure, the temperature of the hot-bending treatment can be 560 °C, 570 °C, 580 °C, 590 °C, 600 °C, 610 °C, 620 °C or 630 °C, or a value within a numerical range formed by any two of the above specific values as endpoints. It should be understood that, in the embodiments, any of the above ranges can be combined with any other range.

In some embodiments of the present disclosure, the composition of the substrate glass is the same as or substantially the same as that of the curved photosensitive glass, as specifically described above.

In some embodiments of the present disclosure, the thickness of the curved photosensitive glass and/or the photosensitive glass of the present disclosure is not particularly limited, for example, it can be 0.3 to 2.0 mm; preferably 0.3 to 1.0 mm. In some embodiments of the present disclosure, the thickness of the curved photosensitive glass and/or the photosensitive glass of the present disclosure can be 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm or 2.0 mm, or a value within a numerical range formed by any two of the above specific values as endpoints. It should be understood that, in the embodiments, any of the above ranges can be combined with any other range.

In some embodiments of the present disclosure, the exposed area has low transmittance in the visible light and infrared wavelength ranges, and the non-exposed area has high transmittance in the visible light and infrared wavelength ranges. The curved photosensitive glass satisfying this transmittance can ensure that the non-exposed area has good light-transmitting performance and a good transparent effect, while the exposed area has low light transmittance and a good light-shielding performance, making it suitable for use in cover plate glass that requires shielding of light sources. Here, the "infrared wavelength range" refers to light with wavelengths of 750 nm to 1000 nm.

In some embodiments of the present disclosure, when the thickness of the curved photosensitive glass is 0.30 to 1.00 mm, the transmittance T₁ of the exposed area of the curved photosensitive glass at a wavelength of 550 nm is 0.00% to 5.00%, preferably the transmittance T₁ is 0.00% to 3%.

In some embodiments of the present disclosure, when the thickness of the curved photosensitive glass is 0.30 to 1.00 mm, the transmittance T₁ of the exposed area of the curved photosensitive glass at a wavelength of 550 nm can be 0%, 1.00%, 2.00%, 3.00%, 4.00% or 5.00%, or a value within a numerical range formed by any two of the above specific values as endpoints. It should be understood that, in the embodiments, any of the above ranges can be combined with any other range.

In some embodiments of the present disclosure, when the thickness of the curved photosensitive glass is 0.30 to 1.00 mm, the transmittance T₂ of the non-exposed area of the curved photosensitive glass at a wavelength of 550 nm is more than or equal to 90%. In some embodiments of the present disclosure, when the thickness of the curved photosensitive glass is 0.30 to 1.00 mm, the transmittance T₂ of the non-exposed area of the curved photosensitive glass at a wavelength of 550 nm can be 90.00%, 90.10%, 90.50%, 91.20%, 92.00%, 93.50%, 94.00%, 94.80% or 95.00%, or a value within a numerical range formed by any two of the above specific values as endpoints. It should be understood that, in the embodiments, any of the above ranges can be combined with any other range.

In some embodiments of the present disclosure, when the thickness of the curved photosensitive glass is 0.30 to 1.00 mm, the transmittance T₃ of the exposed area of the curved photosensitive glass at a wavelength of 850 nm is 0.00% to 10.00%, preferably the transmittance T₃ is 0.00% to 8%.

In some embodiments of the present disclosure, when the thickness of the curved photosensitive glass is 0.30 to 1.00 mm, the transmittance T₃ of the exposed area of the curved photosensitive glass at a wavelength of 850 nm can be 0%, 1.00%, 2.00%, 3.00%, 4.00%, 5.00%, 6.00%, 7.00%, 8.00%, 9.00% or 10.00%, or a value within a numerical range formed by any two of the above specific values as endpoints. It should be understood that, in the embodiments, any of the above ranges can be combined with any other range.

In some embodiments of the present disclosure, when the thickness of the curved photosensitive glass is 0.30 to 1.00 mm, the transmittance T₄ of the non-exposed area of the curved photosensitive glass at a wavelength of 850 nm is more than or equal to 90%. In some embodiments of the present disclosure, when the thickness of the curved photosensitive glass is 0.30 to 1.00 mm, the transmittance T₄ of the non-exposed area of the curved photosensitive glass at a wavelength of 850 nm can be 90.00%, 90.10%, 90.50%, 91.20%, 92.00%, 93.50%, 94.00%, 94.80% or 95.00%, or a value within a numerical range formed by any two of the above specific values as endpoints. It should be understood that, in the embodiments, any of the above ranges can be combined with any other range.

In some embodiments of the present disclosure, when the thickness of the curved photosensitive glass is 0.30 to 1.00 mm, the transmittance T₅ of the exposed area of the curved photosensitive glass at a wavelength of 900 nm is 0.00% to 10.00%, preferably the transmittance T₅ is 0.00% to 8%.

In some embodiments of the present disclosure, when the thickness of the curved photosensitive glass is 0.30 to 1.00 mm, the transmittance T₅ of the exposed area of the curved photosensitive glass at a wavelength of 900 nm can be 0%, 1.00%, 2.00%, 3.00%, 4.00%, 5.00%, 6.00%, 7.00%, 8.00%, 9.00% or 10.00%, or a value within a numerical range formed by any two of the above specific values as endpoints. It should be understood that, in the embodiments, any of the above ranges can be combined with any other range.

In some embodiments of the present disclosure, when the thickness of the curved photosensitive glass is 0.30 to 1.00 mm, the transmittance T₆ of the non-exposed area of the curved photosensitive glass at a wavelength of 900 nm is more than or equal to 90%. In some embodiments of the present disclosure, when the thickness of the curved photosensitive glass is 0.30 to 1.00 mm, the transmittance T₆ of the non-exposed area of the curved photosensitive glass at a wavelength of 900 nm can be 90.00%, 90.10%, 90.50%, 91.20%, 92.00%, 93.50%, 94.00%, 94.80% or 95.00%, or a value within a numerical range formed by any two of the above specific values as endpoints. It should be understood that, in the embodiments, any of the above ranges can be combined with any other range.

In some embodiments of the present disclosure, the crystalline phase of the exposed area of the curved photosensitive glass comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

In some embodiments of the present disclosure, the non-exposed area of the curved photosensitive glass is essentially free of crystalline phases or comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

In some embodiments of the present disclosure, the crystalline phases of the exposed area and the non-exposed area of the curved photosensitive glass are the same.

In some embodiments of the present disclosure, a preparation method for the above-mentioned curved photosensitive glass is provided, comprising:
obtaining the substrate glass;
the substrate glass comprises a first area and a second area, performing masking treatment on the first area, and not performing masking treatment on the second area, to obtain a masked substrate glass; and
after performing processing treatment on the masked substrate glass, obtaining a curved photosensitive glass having the non-exposed area and the exposed area, respectively; wherein the non-exposed area corresponds to the first area, and the exposed area corresponds to the second area; the processing treatment comprises radiation treatment and subsequent heat treatment and hot-bending treatment.

In some embodiments of the present disclosure, the composition of the substrate glass of the present disclosure is the same as or substantially the same as that of the curved photosensitive glass; the specific composition is as described previously.

In the present disclosure, the substrate glass can be prepared using molding methods known in the prior art, which are not limited in any way in the present disclosure. For example, the molding methods for the substrate glass may include, but are not limited to, float process, overflow process, rolling process, or casting process. By way of example, the substrate glass can be obtained by uniformly mixing the components according to the formula, followed by melting and molding, and then cooling and annealing treatment.

By way of example, the raw materials were proportioned according to the formula ratio, a clarifying agent was added, and then mixed for a period of time to obtain a uniformly mixed raw material mixture. The raw material mixture was placed in a platinum crucible, heated to 1250 °C to 1680 °C, preferably the melting temperature was 1480 °C to 1680 °C, and preferably maintained at this temperature for 3 to 12 hours. Then it was poured into a molding mold for cooling and shaping, preferably cooled to 750 °C to 1000 °C, and then placed in an annealing furnace for annealing treatment, preferably the annealing temperature was 400 °C to 650 °C, preferably the annealing time was 10 to 48 hours. Thereafter, it was cooled to room temperature with the annealing furnace to obtain the substrate glass. Those skilled in the art can select the type and amount of the clarifying agent according to requirements without creative effort. Furthermore, the clarifying agent may include, but is not limited to, one or more selected from the group consisting of sodium chloride, tin oxide, antimony oxide, and arsenic oxide, etc. The addition amount of the clarifying agent may be 0 wt% to 1 wt% of the total mass of the raw materials.

In some embodiments of the present disclosure, the thickness of the substrate glass of the present disclosure is not particularly limited, for example, it may be 0.3 to 2.0 mm; preferably 0.3 to 1.0 mm. In some embodiments of the present disclosure, the thickness of the substrate glass of the present disclosure may be 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm or 2.0 mm, or a value within a numerical range formed by any two of the above specific values as endpoints. It should be understood that, in the embodiments, any of the above ranges can be combined with any other range.

In some embodiments of the present disclosure, the masking treatment comprises masking using a masking ink and/or a mask.

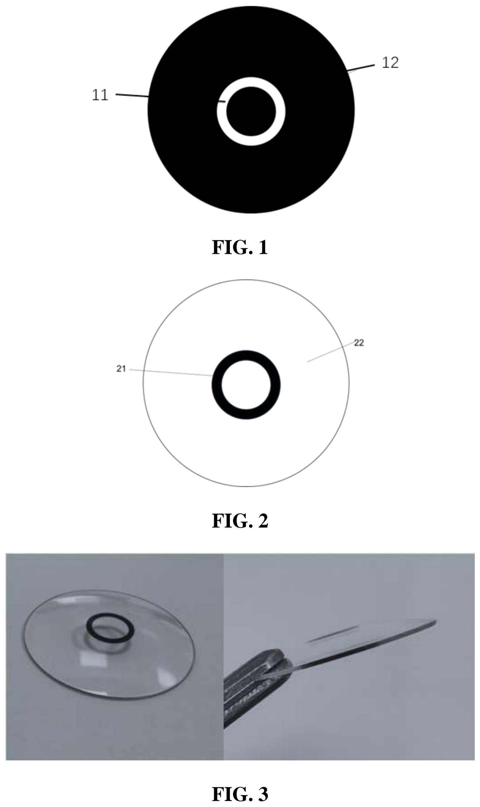

By way of example, a structural schematic diagram of the substrate glass after masking with a masking ink is shown in FIG. 1, where the composite circular hole has a light-transmitting area 11 of the inner diameter and a light-shielding area 12 other than the inner diameter; a structural schematic diagram of the corresponding formed photosensitive glass is shown in FIG. 2, where an exposed area 21 is formed at the position corresponding to the light-transmitting area 11, and a non-exposed area 22 is formed at the position corresponding to the light-shielding area 12.

In some embodiments of the present disclosure, a method of the radiation treatment comprises ultraviolet irradiation treatment, wherein the wavelength of the ultraviolet irradiation treatment is 300 nm to 320 nm, the intensity of the ultraviolet irradiation treatment is 20 mW/cm² to 360 mW/cm², and the time of the ultraviolet irradiation treatment is 5 min to 60 min.

In some embodiments of the present disclosure, the wavelength of the ultraviolet irradiation treatment may be 300 nm, 302 nm, 305 nm, 308 nm, 310 nm, 312 nm, 315 nm, 317 nm or 320 nm, or a value within a numerical range formed by any two of the above specific values as endpoints. In some embodiments of the present disclosure, the intensity of the ultraviolet irradiation treatment may be 20 mW/cm², 40 mW/cm², 60 mW/cm², 80 mW/cm², 100 mW/cm², 120 mW/cm², 140 mW/cm², 160 mW/cm², 180 mW/cm², 200 mW/cm², 210 mW/cm², 220 mW/cm², 230 mW/cm², 240 mW/cm², 250 mW/cm², 260 mW/cm², 270 mW/cm², 280 mW/cm², 290 mW/cm², 300 mW/cm², 310 mW/cm², 320 mW/cm², 330 mW/cm², 340 mW/cm², 350 mW/cm² or 360 mW/cm², or a value within a numerical range formed by any two of the above specific values as endpoints. In some embodiments of the present disclosure, the time of the ultraviolet irradiation treatment may be 5 min, 10 min, 15 min, 20 min, 25 min, 30 min, 35 min, 40 min, 45 min, 50 min, 55 min or 60 min, or a value within a numerical range formed by any two of the above specific values as endpoints; as long as a photosensitive glass with the required performance of the present disclosure can be obtained. It should be understood that, in specific embodiments, any of the above ranges can be combined with any other range, as long as a photosensitive glass with the required performance of the present disclosure can be obtained.

In some embodiments of the present disclosure, the heat treatment comprises nucleation treatment and crystallization treatment. The nucleation treatment and crystallization treatment are common processes in the art.

In some embodiments of the present disclosure, the heating rate of the nucleation treatment is 1 °C/min to 10 °C/min. In some embodiments of the present disclosure, the heating rate of the nucleation treatment may be 1 °C/min, 2 °C/min, 3 °C/min, 4 °C/min, 5 °C/min, 6 °C/min, 7 °C/min, 8 °C/min, 9 °C/min or 10 °C/min, or a value within a numerical range formed by any two of the above specific values as endpoints. In some embodiments of the present disclosure, the temperature of the nucleation treatment may be 430 °C to 500 °C. In some embodiments of the present disclosure, the temperature of the nucleation treatment may be 430 °C, 440 °C, 450 °C, 460 °C, 470 °C, 480 °C, 490 °C or 500 °C, or a value within a numerical range formed by any two of the above specific values as endpoints. In some embodiments of the present disclosure, the time of the nucleation treatment is 30 min to 360 min. In some embodiments of the present disclosure, the time of the nucleation treatment may be 30 min, 45 min, 50 min, 55 min, 60 min, 90 min, 100 min, 120 min, 140 min, 150 min, 160 min, 170 min, 180 min, 190 min, 200 min, 220 min, 240 min, 280 min, 300 min, 320 min, 340 min or 360 min, or a value within a numerical range formed by any two of the above specific values as endpoints.

In the present disclosure, the crystallization treatment comprises single-step crystallization treatment and multi-step crystallization treatment. In some embodiments of the present disclosure, the heating rate of the crystallization treatment is 1 °C/min to 10 °C/min. In some embodiments of the present disclosure, the heating rate of the crystallization treatment may be 1 °C/min, 2 °C/min, 3 °C/min, 4 °C/min, 5 °C/min, 6 °C/min, 7 °C/min, 8 °C/min, 9 °C/min or 10 °C/min, or a value within a numerical range formed by any two of the above specific values as endpoints.

In some embodiments of the present disclosure, the temperature of the single-step crystallization treatment may be 500 °C to 800 °C. In some embodiments of the present disclosure, the temperature of the single-step crystallization treatment may be 500 °C, 510 °C, 520 °C, 530 °C, 540 °C, 550 °C, 560 °C, 570 °C, 580 °C, 600 °C, 650 °C, 700 °C, 750 °C or 800 °C, or a value within a numerical range formed by any two of the above specific values as endpoints. In some embodiments of the present disclosure, the time of the single-step crystallization treatment is 30 min to 480 min. In some embodiments of the present disclosure, the time of the crystallization treatment may be 30 min, 45 min, 50 min, 55 min, 60 min, 90 min, 100 min, 120 min, 140 min, 150 min, 160 min, 170 min, 180 min, 190 min, 200 min, 220 min, 240 min, 280 min, 300 min, 340 min, 380 min, 400 min, 430 min, 450 min or 480 min, or a value within a numerical range formed by any two of the above specific values as endpoints.

In some embodiments of the present disclosure, the multi-step crystallization treatment comprises two-step crystallization treatment. In some embodiments of the present disclosure, the temperature of the first step of crystallization treatment in the two-step crystallization treatment is 500 C to 560 °C, and the temperature of the second step of crystallization treatment is 560 °C to 800 °C. In some embodiments of the present disclosure, the temperature of the first step of crystallization treatment in the two-step crystallization treatment may be 500 °C, 510 °C, 520 °C, 530 °C, 540 °C, 550 °C or 560 °C, or a value within a numerical range formed by any two of the above specific values as endpoints. In some embodiments of the present disclosure, the temperature of the second step of crystallization treatment in the two-step crystallization treatment may be 560 °C, 570 °C, 580 °C, 600 °C, 650 °C, 700 °C, 750 °C or 800 °C, or a value within a numerical range formed by any two of the above specific values as endpoints.

In some embodiments of the present disclosure, the time of the first step of crystallization treatment in the two-step crystallization treatment is 30 min to 240 min, and the time of the second step of crystallization treatment is 30 min to 240 min. In some embodiments of the present disclosure, the time of the first step of crystallization treatment in the two-step crystallization treatment may be 30 min, 45 min, 50 min, 55 min, 60 min, 90 min, 100 min, 120 min, 140 min, 150 min, 160 min, 170 min, 180 min, 190 min, 200 min, 220 min or 240 min, or a value within a numerical range formed by any two of the above specific values as endpoints. In some embodiments of the present disclosure, the time of the second step of crystallization treatment in the two-step crystallization treatment may be 30 min, 45 min, 50 min, 55 min, 60 min, 90 min, 100 min, 120 min, 140 min, 150 min, 160 min, 170 min, 180 min, 190 min, 200 min, 220 min or 240 min, or a value within a numerical range formed by any two of the above specific values as endpoints.

Before and/or after the heat treatment, those skilled in the art may also perform other conventional steps to obtain substrate glass or curved photosensitive glass samples meeting the required specifications or requirements, such as shaping treatment, cutting treatment (e.g., using a multi-wire saw for cutting), CNC machining treatment (computer numerical control, i.e., CNC machine tools), thinning treatment or polishing treatment, etc. The size processing of the substrate glass or curved photosensitive glass samples is not limited in the present disclosure. For example, it may be 50 mm ×50 mm ×0.7 mm, 300 mm ×120 mm ×0.7 mm, etc.

In some embodiments of the present disclosure, a strengthened curved photosensitive glass is provided, comprising a strengthening layer, wherein the strengthening layer extends inward from a surface of a curved photosensitive glass body, a thickness of the strengthened curved photosensitive glass is t, and a thickness of the strengthening layer is greater than 0 and less or equal to 0.22 t, the strengthening layer comprises the following components: SiO₂: 65.00% to 75.00%, Al₂O₃: 5.00% to 10.00%, Na₂O: 5.00% to 20.00%, K₂O: 2.00% to 6.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides; and a content of Li₂O in the strengthening layer is lower than the content of Li₂O at a center of the strengthened curved photosensitive glass;
the center of the strengthened curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides; and
the strengthened curved photosensitive glass comprises a non-exposed area and an exposed area.

In some embodiments of the present disclosure, a strengthened curved photosensitive glass is provided, the strengthened curved photosensitive glass has a thickness of t and is obtained by chemically strengthening the above-mentioned curved photosensitive glass or the curved photosensitive glass prepared by the preparation method of the above-mentioned curved photosensitive glass.

In some embodiments of the present disclosure, the above-mentioned strengthened curved photosensitive glass comprises a strengthening layer. The strengthening layer comprises the following components: SiO₂: 65.00% to 75.00%, Al₂O₃: 5.00% to 10.00%, Na₂O: 5.00% to 20.00%, K₂O: 2.00% to 6.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides; and the content of Li₂O in the strengthening layer is lower than the content of Li₂O at the center of the strengthened curved photosensitive glass;

In the present disclosure, chemical strengthening can be performed by methods known in the art; for example, chemical strengthening comprises single-step chemical strengthening or multi-step chemical strengthening. In some embodiments of the present disclosure, the single-step chemical strengthening uses a salt bath comprising NaNO₃; preferably the content of NaNO₃ is 30 to 100 wt%; preferably the single-step chemical strengthening uses a mixed salt bath comprising NaNO₃ and KNO₃, preferably the content of KNO₃ in the mixed salt bath is 80 to 100 wt%, and the content of NaNO₃ is 0 to 20 wt%.

In some embodiments of the present disclosure, the temperature of the single-step chemical strengthening is 380 to 480 °C; preferably the ion exchange time of the single-step chemical strengthening is 1 to 10 hours.

In some embodiments of the present disclosure, the multi-step chemical strengthening comprises two steps of chemical strengthening, wherein a first step of chemical strengthening uses a salt bath comprising NaNO₃, preferably the content of NaNO₃ is 30 to 100 wt%; a second step of chemical strengthening uses a salt bath comprising KNO₃, preferably the content of KNO₃ is 60 to 100 wt%.

In some embodiments of the present disclosure, the temperature of the first step of chemical strengthening is 380 to 480 °C, preferably the time of the first step of chemical strengthening is 1 to 10 hours; preferably the temperature of the second step of chemical strengthening is 380 to 480 °C, preferably the time of the second step of chemical strengthening is 5 to 120 min.

In some embodiments of the present disclosure, the above-mentioned strengthened curved photosensitive glass comprises one or more selected from the group consisting of strengthened 3D photosensitive glass, strengthened 4D photosensitive glass, strengthened 5D photosensitive glass, strengthened special-shaped photosensitive glass, and strengthened four-curved-surface photosensitive glass.

In some embodiments of the present disclosure, the thickness t of the above-mentioned strengthened glass is not particularly limited, for example, it may be 0.3 to 2.0 mm; preferably 0.3 to 1.0 mm. In some embodiments of the present disclosure, the thickness of the strengthened glass may be 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm or 2.0 mm, or a value within a numerical range formed by any two of the above specific values as endpoints. It should be understood that, in the embodiments, any of the above ranges can be combined with any other range.

In some embodiments of the present disclosure, the surface CS of the non-exposed area of the above-mentioned strengthened curved photosensitive glass is more than or equal to 300 MPa, preferably more than or equal to 350 MPa, further preferably 350 MPa to 600 MPa. In some embodiments of the present disclosure, the surface CS of the non-exposed area of the strengthened curved photosensitive glass may be 350 MPa, 351 MPa, 395 MPa, 438 MPa, 385 MPa, 391 MPa, 398 MPa, 402 MPa, 422 MPa, 450 MPa, 480 MPa, 500 MPa, 530 MPa, 550 MPa, 580 MPa or 600 MPa, or a value within a numerical range formed by any two of the above specific values as endpoints; as long as a photosensitive glass with the required performance of the present disclosure can be obtained. It should be understood that, in specific embodiments, any of the above ranges can be combined with any other range, as long as a photosensitive glass with the required performance of the present disclosure can be obtained.

In some embodiments of the present disclosure, the uniaxial compressive strength of the above-mentioned strengthened curved photosensitive glass is more than or equal to 100 N, preferably 100 N to 400 N, more preferably 200 N to 400 N. In some embodiments of the present disclosure, the uniaxial compressive strength of the strengthened curved photosensitive glass of the present disclosure may be 294 N, 361 N, 392 N, 301 N, 314 N, 375 N, 376 N, 390 N or 400 N, or a value within a numerical range formed by any two of the above specific values as endpoints; as long as a photosensitive glass with the required performance of the present disclosure can be obtained. It should be understood that, in specific embodiments, any of the above ranges can be combined with any other range, as long as a photosensitive glass with the required performance of the present disclosure can be obtained.

The curved photosensitive glass and/or strengthened curved photosensitive glass with excellent performance provided by the present disclosure can be used in electronic devices, including, but are not limited to, mobile phones, tablet computers, handheld game consoles, portable digital devices (e.g., digital cameras), smart home devices, smart wearable devices (e.g., smart bracelets, smart watches, smart glasses), and can also be used in vehicles, aircraft or vessels, as well as any glass device requiring curved photosensitive glass. For example, they can be used in mobile phone back cover glass, smartwatch housing glass, and the like; for example, they can be used in windshield glass for vehicles, aircraft or vessels, such as front windshield or side windshield.

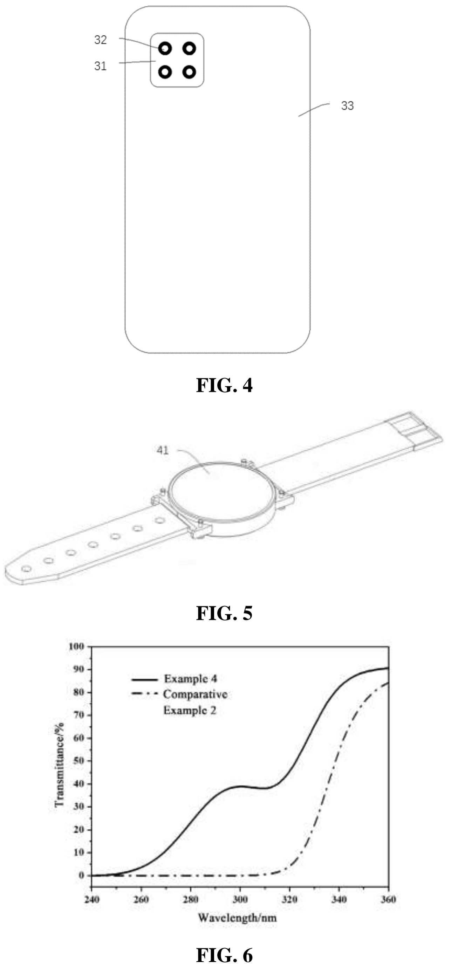

By way of example, the curved photosensitive glass and/or strengthened curved photosensitive glass with excellent performance provided by the present disclosure can be configured to manufacture cover plate glass. The cover plate glass can be a back cover plate or a camera protection cover plate of an electronic device such as a mobile phone. By way of example, the curved photosensitive glass and/or strengthened curved photosensitive glass with excellent performance provided by the present disclosure can be used in electronic devices. In some embodiments of the present disclosure, an electronic device is provided, which can be a mobile phone (as shown in FIG. 4, the curved photosensitive glass and/or strengthened curved photosensitive glass can serve as the back cover of the mobile phone), a tablet computer, a smart wearable device (as shown in FIG. 5, the curved photosensitive glass and/or strengthened curved photosensitive glass can serve as the shell part at the bottom of the smartwatch), or other electronic products.

In some embodiments of the present disclosure, the electronic device comprises a smart wearable device worn on the body, which comprises a shell having a top and a bottom, and the bottom is designed to be in contact with the user's skin when worn. The shell part at the bottom comprises the above-mentioned curved photosensitive glass and/or strengthened curved photosensitive glass of the present disclosure.

In some embodiments of the present disclosure, as shown in FIG. 4, the electronic device further comprises a camera component 32 located inside the housing. The housing may comprise a camera protection cover plate 31. The camera protection cover plate 31 is disposed over the camera component 32 and configured to protect the camera component 32. The camera protection cover plate 31 uses the aforementioned curved photosensitive glass and/or strengthened curved photosensitive glass. In some embodiments of the present disclosure, the camera protection cover plate 31 may partially use the aforementioned curved photosensitive glass and/or strengthened curved photosensitive glass, or entirely use the aforementioned curved photosensitive glass and/or strengthened curved photosensitive glass. In some embodiments of the present disclosure, the location of the camera protection cover plate 31 depends on the location of the camera component 32, which may be located on the front side or the rear of the electronic device. In some embodiments of the present disclosure, the camera protection cover plate 31 may be a separate structure from the back cover 33. In other embodiments of the present disclosure, the camera protection cover plate 31 may also be an integrated structure with the back cover 33.

The technical solutions of the present disclosure are further described in detail below with reference to examples. The examples of the present disclosure described in detail below are exemplary and are only configured to explain the present disclosure, and should not be construed as limiting the present disclosure.

### Example 1

(1) The raw materials were proportioned according to the component ratios in Table 1, with a total mass of the configured raw materials of 2000 g. 10 g of the clarifying agent sodium chloride (NaCl) was added to the configured raw materials. Then they were mixed for 30 minutes using a V-type mixer to obtain a uniformly mixed raw material mixture.

The uniformly mixed batch material was transferred to a platinum crucible at 1450 °C in small batches multiple times, with an interval of 40 minutes between each addition. After all batch material was added, the temperature was raised to 1500 °C. Stirring and fining were carried out using a platinum stirrer for a total of 10 hours. Subsequently, shaping was performed by continuous drawing to form a glass brick of the required specification. The glass brick was placed in an annealing furnace at 450 °C for 12 hours, and then naturally cooled to room temperature to obtain a substrate glass sample brick.

The obtained substrate glass sample brick was subjected to cold processing comprising cutting, CNC machining (the CNC instrument and equipment model used in the present disclosure is: RCG500S), and polishing, to produce a substrate glass meeting the required specifications and requirements. The size of the substrate glass was 50 mm ×50 mm ×0.7 mm.

(2) The above-mentioned glass substrate was sequentially ultrasonically cleaned in deionized water, absolute ethanol, propanol, and deionized water for 10 minutes each, and then dried in a drying oven. After cleaning, a masking ink was applied to local areas of the upper and lower main surfaces of the photosensitive substrate glass, as shown in FIG. 1, where the black areas are the masked areas. Subsequently, both-sided irradiation treatment was performed for a total of 20 minutes under parallel ultraviolet light with a wavelength of 310 nm (UVHX800*850 drawer type), with an irradiation light energy density of 200 mW/cm². The glass after ultraviolet irradiation was subjected to heat treatment according to the heat treatment process in Table 1 to obtain a photosensitive glass. The nucleation treatment and the crystallization treatment were comprised in the heat treatment. The heating rates for both nucleation treatment and crystallization treatment were 10 °C/min. The above-mentioned photosensitive glass was sequentially subjected to cold processing such as laser cutting, splitting, polishing, and chamfering to obtain a photosensitive glass with dimensions of φ30*0.7 mm, as shown in FIG. 2.

(3) The above-mentioned photosensitive glass was subjected to hot-bending treatment to obtain a 3D photosensitive glass, comprising an exposed area and a non-exposed area. The glass shape as shown in FIG. 3.

The hot-bending treatment process involved 4 preheating stations, 3 hot pressing stations, and 3 cooling stations. The specific hot-bending process is shown in Table 2 below.

The crystalline phases and transmittances (transmittance T₁ at a wavelength of 550 nm, transmittance T₃ at a wavelength of 850 nm, and transmittance T₅ at a wavelength of 900 nm) of the exposed area of the 3D photosensitive glass were tested. The crystalline phases and transmittances (transmittance T₂ at a wavelength of 550 nm, transmittance T₄ at a wavelength of 850 nm, and transmittance T₆ at a wavelength of 900 nm) of the non-exposed area of the 3D photosensitive glass were tested. The results are shown in Table 3.

(4) The 3D photosensitive glass obtained in (3) was subjected to chemical strengthening treatment. The chemical strengthening treatment was performed sequentially in a salt bath of 100 wt% NaNO₃ at 450 °C for 3 hours, followed by a salt bath of 100 wt% KNO₃ at 430 °C for 15 minutes to obtain a strengthened 3D photosensitive glass.

The surface CS of the non-exposed area and the uniaxial compressive strength of the strengthened 3D photosensitive glass were tested. The results are shown in Table 4.

### Examples 2 to 7

These were carried out with reference to Example 1, except that the raw material compositions, process parameters and corresponding test results for each example are shown in Tables 1 to 4, respectively.

### Comparative Examples 1 to 3

These were carried out with reference to Example 1, except that the raw material compositions, process parameters and corresponding test results for each comparative example are shown in Tables 1 to 4, respectively.

**Table 1**

| Composition (wt%) | Exampl e 1 | Exampl e 2 | Exampl e 3 | Exampl e 4 | Examp le 5 | Examp le 6 | Examp le 7 | Compa rative Exampl e 1 | Compa rative Exampl e 2 | Compa rative Exampl e 3 |
|---|---|---|---|---|---|---|---|---|---|---|
| SiO₂ | 67.20% | 74.60% | 68.26% | 70.28% | 70.01% | 69.05% | 65.30% | 70.62% | 70.17% | 70.64% |
| Al₂O₃ | 7.25% | 5.83% | 8.76% | 7.62% | 7.89% | 6.47% | 8.96% | 7.62% | 7.62% | 7.62% |
| Li₂O | 12.30% | 8.02% | 12.26% | 9.81% | 9.48% | 11.05% | 14.37% | 9.81% | 9.81% | 9.81% |
| Na₂O | 3.22% | 3.71% | 2.08% | 2.42% | 2.40% | 2.50% | 1.02% | 2.42% | 2.42% | 2.42% |
| K₂O | 3.83% | 1.42% | 3.02% | 3.41% | 3.52% | 2.58% | 2.87% | 3.41% | 3.41% | 3.41% |
| ZrO₂ | 5.56% | 5.72% | 5.12% | 5.58% | 5.63% | 7.50% | 6.98% | 5.58% | 5.58% | 5.58% |
| Ag₂O | 0.23% | 0.27% | 0.15% | 0.36% | 0.45% | 0.31% | 0.21% | 0.36% | 0.36% | 0.12% |
| CeO₂ | 0.12% | 0.07% | 0.10% | 0.09% | 0.14% | 0.11% | 0.09% | 0.09% | 0.20% | 0.10% |
| Sb₂O₃ | 0.29% | 0.36% | 0.25% | 0.43% | 0.48% | 0.43% | 0.20% | 0.09% | 0.43% | 0.30% |
| Total | 100.00 % | 100.00 % | 100.00 % | 100.00 % | 100.00 % | 100.00 % | 100.00 % | 100.00 % | 100.00 % | 100.00 % |
| Temperature of nucleation treatment / °C | 450 | 450 | 450 | 450 | 450 | 450 | 450 | 450 | 450 | 450 |
| Time of nucleation treatment /min | 60 | 60 | 60 | 60 | 60 | 60 | 60 | 60 | 60 | 60 |
| Temperature of crystallization treatment 1 / °C | 500 | 500 | 500 | 500 | 500 | 500 | 500 | 500 | 500 | 500 |
| Time of crystallization treatment 1 /min | 240 | 240 | 240 | 240 | 240 | 240 | 240 | 240 | 240 | 240 |
| Temperature of crystallization treatment 2 / °C | 590 | 590 | 590 | 590 | 590 | 590 | 590 | 590 | 590 | 590 |
| Time of crystallization treatment 2 /min | 90 | 90 | 90 | 90 | 90 | 90 | 90 | 90 | 90 | 90 |

**Table 2**

| | | Prehe ating zone 1 | Prehe ating zone 2 | Prehe ating zone 3 | Prehe ating zone 4 | Hot pressi ng zone 1 | Hot pressi ng zone 2 | Hot pressi ng zone 3 | Cooli ng zone 1 | Cooli ng zone 2 | Cooli ng zone 3 |
|---|---|---|---|---|---|---|---|---|---|---|---|
| Hot-bending process 1 | Temperat ure ( °C) | 250 | 300 | 450 | 500 | 600 | 600 | 600 | 500 | 450 | 300 |
| | Time (s) /Pressure | 90/0 | 90/0 | 90/0 | 90/0 | 90/0.4 | 90/0.4 | 90/0 | 90/0 | 90/0 | 90/0 |
| | (MPa) | | | | | | | | | | |
| Hot-bending process 2 | Temperat ure ( °C) | 250 | 300 | 450 | 500 | 630 | 630 | 630 | 500 | 450 | 300 |
| | Time (s) /Pressure (MPa) | 90/0 | 90/0 | 90/0 | 90/0 | 90/0.4 | 90/0.4 | 90/0 | 90/0 | 90/0 | 90/0 |

**Table 3**

| | Hot-bending process | Crystalli ne phase of exposed area | T₁/ % | T₃/ % | T₅/ % | Appearance of exposed area | Crystallin e phase of non-expos ed area | T₂/ % | T₄/ % | T₆/ % | Appearance of non-exposed area |
|---|---|---|---|---|---|---|---|---|---|---|---|
| Example 1 | Process 1 | Li₂SiO₃ | 0 | 0.6 | 0.9 | Black | Li₂SiO₃ | 91 | 92 | 92 | Transparent |
| | Process 2 | Li₂SiO₃ | 0 | 0.2 | 0.3 | Black | Li₂SiO₃ | 91 | 92 | 92 | Transparent |
| Example 2 | Process 1 | Li₂SiO₃ | 0 | 1.1 | 1.9 | Black | Li₂SiO₃ | 91 | 92 | 92 | Transparent |
| Example 3 | Process 1 | Li₂SiO₃ | 0 | 0.5 | 1.3 | Black | Li₂SiO₃ | 91 | 92 | 92 | Transparent |
| Example 4 | Process 1 | Li₂SiO₃ | 0 | 1 | 1 | Black | Li₂SiO₃ | 91 | 92 | 92 | Transparent |
| | Process 2 | Li₂SiO₃ | 0.5 | 1.4 | 2.0 | Black | Li₂SiO₃ | 91 | 92 | 92 | Transparent |
| Example 5 | Process 1 | Li₂SiO₃ | 0 | 0.1 | 0.2 | Black | Li₂SiO₃ | 91 | 92 | 92 | Transparent |
| Example 6 | Process 1 | Li₂SiO₃ | 0 | 0.3 | 0.9 | Black | Li₂SiO₃ | 91 | 92 | 92 | Transparent |
| Example 7 | Process 1 | Li₂SiO₃ | 0 | 0.9 | 2 | Black | Li₂SiO₃ | 91 | 92 | 92 | Transparent |
| Compara tive Example 1 | Process 1 | Li₂SiO₃ | 4.5 | 54. 9 | 64. 3 | Brown | Li₂SiO₃ | 91 | 92 | 92 | Transparent |
| | Process 2 | Li₂SiO₃ | 1.5 | 5.7 | 16. 5 | Brown | Li₂SiO₃ | 82 | 85 | 87 | Phase separation, and milky |
| Compara tive Example 2 | Process 1 | None | 24. 6 | 67 | 72 | Brown | None | 91 | 92 | 92 | Transparent |
| Compara tive Example 3 | Process 2 | None | 37 | 76 | 80 | Brown | None | 91 | 92 | 92 | Transparent |

**Table 4**

| | Example 1 | Example 2 | Example 3 | Example 4 | Example 5 | Example 6 | Example 7 |
|---|---|---|---|---|---|---|---|
| CS of non-exposed area/ MPa | 351 | 395 | 438 | 385 | 391 | 398 | 402 |
| Uniaxial compressive strength/ N | 294 | 361 | 392 | 301 | 314 | 375 | 376 |

As can be seen from the above tables, the 3D photosensitive glass prepared according to the examples of the present disclosure exhibits good light-shielding performance in its exposed area, particularly excellent light-shielding performance in the infrared wavelength range, and displays a desirable black appearance. At the same time, its non-exposed area possesses good light transmittance in both the visible light and infrared wavelength ranges, meeting the requirements for applications such as mobile phone cover plates and the back cover 41 of smartwatches.

By comparing the data from Example 4 and Comparative Example 1 of the present disclosure, it can be observed that under the condition where the hot-bending process is Process 1 for both, the 3D photosensitive glass of Comparative Example 1, due to its Sb₂O₃ content being too low and outside the scope of the present disclosure, cannot generate sufficient Ce³⁺ in the glass. Consequently, it cannot reduce enough Ag⁺ to silver atoms Ag⁰ under UV irradiation, leading to the light-shielding effect of the exposed area failing to meet requirements and resulting in a brown appearance.

From the comparison between Example 4 and Comparative Example 1 of the present disclosure, it can be seen that under the condition where the hot-bending process is Process 2 for both, after hot-bending, the 3D photosensitive glass of Comparative Example 1 not only fails to achieve the required light-shielding effect in the exposed area, but also exhibits phase separation in the non-exposed area, with significantly reduced transmittance, thus also failing to meet the light transmittance requirements.

From the comparison between Example 4 and Comparative Example 2 of the present disclosure, it can be observed that for the 3D photosensitive glass of Comparative Example 2, with an excessive content of CeO₂, the penetration depth of ultraviolet light in the exposed area of the glass is reduced. As shown in FIG. 6, insufficient Ce³⁺ is excited by UV to reduce enough Ag⁺ to silver atoms Ag⁰, consequently leading to the light-shielding effect of the exposed area failing to meet requirements.

From the comparison between Example 4 and Comparative Example 3 of the present disclosure, it can be seen that the 3D photosensitive glass of Comparative Example 3, due to its Ag₂O content being too low, cannot generate enough silver atoms Ag⁰, thus resulting in the light-shielding effect of the exposed area failing to meet requirements.

The above descriptions are merely specific embodiments of the present disclosure and are not intended to limit the present disclosure. For those skilled in the art, various modifications and changes can be made to the present disclosure. Any modifications, equivalent substitutions, improvements, and the like, made within the spirit and principles of the present disclosure shall be included within the protection scope of the present disclosure.

### Industrial Applicability

In summary, the present disclosure provides a curved photosensitive glass whose exposed area exhibits good light-shielding performance and can meet the requirements for fields such as mobile phone cover plates and smartwatches.

## Claims

1. A curved photosensitive glass, comprising an exposed area and a non-exposed area, wherein the curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on a mass percentage of oxides.

2. The curved photosensitive glass according to claim 1, wherein the curved photosensitive glass comprises the following components:
SiO₂ with a content of 66.00% to 74.60%, preferably SiO₂ with a content of 66.50% to 74.00%; and/or
Al₂O₃ with a content of 5.10% to 9.70%, preferably Al₂O₃ with a content of 5.20% to 9.40%; and/or
Li₂O with a content of 7.10% to 14.50%, preferably Li₂O with a content of 8.00% to 14.50%; and/or
Na₂O with a content of 1.00% to 3.80%, preferably Na₂O with a content of 1.00% to 3.75%; and/or
K₂O with a content of 1.40% to 3.90%, preferably K₂O with a content of 1.40% to 3.85%; and/or
ZrO₂ with a content of 5.00% to 7.50%, preferably ZrO₂ with a content of 5.10% to 7.50%; and/or
Ag₂O with a content of 0.15% to 0.60%, preferably Ag₂O with a content of 0.15% to 0.50%; and/or
CeO₂ with a content of 0.05% to 0.14%, preferably CeO₂ with a content of 0.07% to 0.14%; and/or
Sb₂O₃ with a content of 0.20% to 0.50%, preferably Sb₂O₃ with a content of 0.20% to 0.48%,
based on the mass percentage of oxides.

3. The curved photosensitive glass according to claim 1 or 2, wherein the curved photosensitive glass comprises one or more selected from the group consisting of 3D photosensitive glass, 4D photosensitive glass, 5D photosensitive glass, special-shaped photosensitive glass, and four-curved-surface photosensitive glass.

4. The curved photosensitive glass according to any one of claims 1 to 3, wherein the curved photosensitive glass is obtained by processing treatment of a substrate glass, and the processing treatment comprises radiation treatment and subsequent heat treatment and hot-bending treatment.

5. The curved photosensitive glass according to claim 4, wherein a composition of the substrate glass is the same as or substantially the same as that of the curved photosensitive glass.

6. The curved photosensitive glass according to any one of claims 1 to 5, wherein a thickness of the curved photosensitive glass is 0.3 to 2.0 mm; preferably 0.3 to 1.0 mm.

7. The curved photosensitive glass according to any one of claims 1 to 6, wherein:
when the thickness of the curved photosensitive glass is 0.30 to 1.00 mm, a transmittance T₁ of the exposed area of the curved photosensitive glass at a wavelength of 550 nm is 0.00% to 5.00%, preferably the transmittance T₁ is 0.00% to 3%; and/or
when the thickness of the curved photosensitive glass is 0.30 to 1.00 mm, a transmittance T₂ of the non-exposed area of the curved photosensitive glass at a wavelength of 550 nm is more than or equal to 90%; and/or
when the thickness of the curved photosensitive glass is 0.30 to 1.00 mm, a transmittance T₃ of the exposed area of the curved photosensitive glass at a wavelength of 850 nm is 0.00% to 8.00%, preferably the transmittance T₃ is 0.00% to 5%; and/or
when the thickness of the curved photosensitive glass is 0.30 to 1.00 mm, a transmittance T₄ of the non-exposed area of the curved photosensitive glass at a wavelength of 850 nm is more than or equal to 90%; and/or
when the thickness of the curved photosensitive glass is 0.30 to 1.00 mm, a transmittance T₅ of the exposed area of the curved photosensitive glass at a wavelength of 900 nm is 0.00% to 10.00%, preferably the transmittance T₅ is 0.00% to 8%; and/or
when the thickness of the curved photosensitive glass is 0.30 to 1.00 mm, a transmittance T₆ of the non-exposed area of the curved photosensitive glass at a wavelength of 900 nm is more than or equal to 90%.

8. The curved photosensitive glass according to any one of claims 1 to 7, wherein a crystalline phase of the exposed area of the curved photosensitive glass comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

9. The curved photosensitive glass according to claim 8, wherein the non-exposed area of the curved photosensitive glass is substantially free of crystalline phase or comprises one or more selected from the group consisting of lithium metasilicate, lithium disilicate, petalite, quartz, spodumene, eucryptite, zinc oxide, Ag nanocrystal, Cu nanocrystal, Au nanocrystal, and Bi nanocrystal.

10. The curved photosensitive glass according to claim 9, wherein the crystalline phase of the exposed area and the crystalline phase of the non-exposed area of the curved photosensitive glass are the same.

11. A preparation method for the curved photosensitive glass according to any one of claims 1 to 10, comprising:
obtaining the substrate glass;
the substrate glass comprises a first area and a second area, performing masking treatment on the first area, and not performing masking treatment on the second area, to obtain a masked substrate glass; and
after performing processing treatment on the masked substrate glass, obtaining the curved photosensitive glass having the non-exposed area and the exposed area; wherein the non-exposed area corresponds to the first area, and the exposed area corresponds to the second area; and the processing treatment comprises radiation treatment and subsequent heat treatment and hot-bending treatment.

12. The preparation method for the curved photosensitive glass according to claim 11, wherein the composition of the substrate glass is the same as or substantially the same as that of the curved photosensitive glass.

13. The preparation method for the curved photosensitive glass according to claim 11 or 12, wherein a thickness of the substrate glass is 0.3 to 2.0 mm; preferably 0.3 to 1.0 mm.

14. The preparation method for the curved photosensitive glass according to any one of claims 11 to 13, wherein the masking treatment comprises masking using a masking ink and/or a mask.

15. The preparation method for the curved photosensitive glass according to any one of claims 11 to 14, wherein the heat treatment comprises nucleation treatment and crystallization treatment.

16. The preparation method for the curved photosensitive glass according to claim 15, wherein:
a heating rate of the nucleation treatment is 1 °C/min to 10 °C/min; and/or
a temperature of the nucleation treatment is 430 °C to 500 °C; and/or
a time of the nucleation treatment is 30 min to 360 min; and/or
a heating rate of the crystallization treatment is 1 °C/min to 10 °C/min; and/or
a temperature of the crystallization treatment is higher than that of the nucleation treatment, and the temperature of the crystallization treatment is 500 °C to 800 °C; and/or
a time of the crystallization treatment is 30 min to 480 min.

17. A strengthened curved photosensitive glass, comprising a strengthening layer, wherein the strengthening layer extends inward from a surface of a curved photosensitive glass body, a thickness of the strengthened curved photosensitive glass is t, and a thickness of the strengthening layer is greater than 0 and less or equal to 0.22 t,
a center of the strengthened curved photosensitive glass comprises the following components: SiO₂: 65.00% to 75.00%, Al₂O₃: 5.00% to 10.00%, Li₂O: 7.00% to 15.00%, Na₂O: 1.00% to 4.00%, K₂O: 1.00% to 4.00%, ZrO₂: 5.00% to 8.00%, Ag₂O: 0.15% to 0.80%, CeO₂: 0.05% to 0.15%, and Sb₂O₃: 0.1% to 0.50%, based on a mass percentage of oxides;
the strengthening layer comprises the following components: SiO₂: 65.00% to 75.00%, Al₂O₃: 5.00% to 10.00%, Na₂O: 5.00% to 20.00%, K₂O: 2.00% to 6.00%, ZrO₂: 5.00% to 8.00%, Ag₂O: 0.15% to 0.80%, CeO₂: 0.05% to 0.15%, and Sb₂O₃: 0.1% to 0.50%, based on the mass percentage of oxides; a content of Li₂O in the strengthening layer is lower than a content of Li₂O at the center of the strengthened curved photosensitive glass; and
the strengthened curved photosensitive glass comprises a non-exposed area and an exposed area.

18. The strengthened curved photosensitive glass according to claim 17, wherein a surface CS of the non-exposed area of the strengthened curved photosensitive glass is more than or equal to 300 MPa, preferably more than or equal to 350 MPa, further preferably 350 MPa to 600 MPa.

19. The strengthened curved photosensitive glass according to claim 17 or 18, wherein a uniaxial compressive strength of the strengthened curved photosensitive glass is more than or equal to 100 N, preferably 100 N to 400 N, more preferably 200 N to 400 N.

20. A cover plate glass made of the curved photosensitive glass according to any one of claims 1 to 10, or the curved photosensitive glass prepared by the preparation method according to any one of claims 11 to 16, or the strengthened curved photosensitive glass according to any one of claims 17 to 19.

21. An electronic device, comprising the curved photosensitive glass according to any one of claims 1 to 10, or the curved photosensitive glass prepared by the preparation method according to any one of claims 11 to 16, or the strengthened curved photosensitive glass according to any one of claims 17 to 19.

22. The electronic device according to claim 21, wherein the electronic device comprises a shell having a top and a bottom, a shell part at the bottom comprises the curved photosensitive glass according to any one of claims 1 to 10, or the curved photosensitive glass prepared by the preparation method according to any one of claims 11 to 16, or the strengthened curved photosensitive glass according to any one of claims 17 to 19.

23. The electronic device according to claim 21 or 22, wherein the electronic device further comprises a camera component, a housing of the electronic device comprises a camera protection cover plate, the camera protection cover plate is disposed over the camera component, and the camera protection cover plate comprises the curved photosensitive glass according to any one of claims 1 to 10, or the curved photosensitive glass prepared by the preparation method according to any one of claims 11 to 16, or the strengthened curved photosensitive glass according to any one of claims 17 to 19.

24. Use of the curved photosensitive glass according to any one of claims 1 to 10, or the curved photosensitive glass prepared by the preparation method according to any one of claims 11 to 16, or the strengthened curved photosensitive glass according to any one of claims 17 to 19 in the configuration as a component for a mobile phone, a wearable device, a camera module, or a vehicle.
